# EUROPEAN PATENT APPLICATION

(11) **EP 4 773 488 A1**
(43) Date of publication of application: **08.07.2026**
(21) Application number: 24858992.1
(22) Date of filing: 01.03.2024
(51) Int. Cl.: H02K 49/00, H01F 5/00, H01F 7/08

(54) **SOLENOID-TYPE CLUTCH DEVICE**

(30) Priority: 28.08.2023 JP 2023138363
(71) Applicant: HAMANAKODENSO CO., LTD., Kosai-city Shizuoka 431-0431 (JP)
(72) Inventor: ASAKURA, Keisuke, Kosai-city, Shizuoka 431-0431 (JP)
(74) Representative: Kuhnen & Wacker Patent- und Rechtsanwaltsbüro PartG mbB
(86) International application number: PCT/JP2024/007799
(87) International publication number: WO 2025/046942

(57) **Abstract**

A moving core has a moving core main member made of soft magnetic materials and a permanent magnet member made of hard magnetic materials. A direction of the magnetic pole of the permanent magnet member matches that of a coil when the coil is positively energized with the forward current, and a stator core is non-existent in a range of movement of the permanent magnet member. Since the moving core has a permanent magnet member, the magnetic flux of the coil may be rectified by the permanent magnet member. This reduces the magnetic flux leaking into a side of the rotatable member which is made of soft magnetic materials. In particular, it is possible to properly perform the rectification of the magnetic flux in a case that a direction of the magnetic pole of the permanent magnet member is coincide with a direction of the magnetic pole of the coil when it is positively energized with a forward current. Moreover, since there is the non-existent portion of the stator core in the range of movement of the permanent magnet member, it is possible to prevent generation of a magnetic flux loop of the magnetic field of a permanent magnet and it is possible to prevent a reduction of the attractive force.

## Description

### [CROSS REFERENCE TO RELATED APPLICATION]

This application is based on Japanese Patent Application No. 2023-138363, filed on August 28, 2023, the entire contents of which are incorporated herein by reference.

### [TECHNICAL FIELD]

The present disclosure relates to a solenoid-type clutch device that switches transmission or non-transmission of rotation of a rotatable member by switching energizing or de-energizing of a coil. This disclosure can be used, e.g., to switch transmission or non-transmission of rotational power between a differential case and a drive shaft in a differential device.

### [BACKGROUND]

In patent literature 1, a coil, a stator core, and a moving core of a solenoid device are arranged coaxially with respect to a rotatable member for advantages of mounting and assembling. Generally, in order to mount the solenoid device coaxially with the rotatable member, it is necessary to place the rotatable member to penetrate inside the solenoid device. In general, the rotatable member is formed by soft magnetic materials. Therefore, the magnetic flux generated by magnetizing the coil leaks out into the rotatable member, which is made of soft magnetic materials, and the magnetic flux of the coil cannot be maximally utilized in the solenoid device. As a result, there may be a disadvantage to reduce an attractive force of a clutch plate in a clutch device.

In order to prevent magnetic flux leakage to the rotatable member, it may be considered to dispose sufficient layers of non-magnetic materials between the solenoid device and the rotatable member. However, in such a case, the solenoid device would become larger, making it more difficult to install in a differential device etc.

### [PRIOR ART LITERATURE]

### [PATENT LITERATURE]

[PATENT LITERATURE 1] JP2005-240861A

### [SUMMARY]

In view of the above, it is an object to suppress reduction of an attractive force of a clutch plate in a clutch device by reducing a leakage of a magnetic flux from the solenoid device to the rotatable member as much as possible.

The first disclosure is a solenoid-type clutch device, comprising: a rotatable member made of soft magnetic materials that is rotatable around a center shaft; a first clutch plate rotatable together with the rotatable member; a second clutch plate arranged to oppose the first clutch plate; a coil fixedly disposed on an outside of the rotatable member; a stator core made of soft magnetic materials that is fixedly disposed on an outside of the rotatable member and constitutes a magnetic circuit when the coil is energized; a moving core which is located on an outside of the rotatable member at an inside of the coil to form a magnetic gap with the stator core, forms a magnetic circuit with the stator core when the coil is energized, and is movable in an axial direction of the rotatable member to narrow the magnetic gap when the coil is positively energized; a return spring that forces the stator core and the moving core in a direction of pulling away from each other; and a plunger made of non-magnetic material that transmits a movement of the moving core in an axial direction of the rotatable member to either the first second clutch plate or the second clutch plate, wherein the moving core has a moving core main member made of soft magnetic materials and a permanent magnet member made of hard magnetic materials, and wherein a magnetic pole direction of the permanent magnet member coincides with the magnetic pole direction when the coil is positively energized, and wherein the stator core is non-existent in a range of movement of the permanent magnet member. A forward current for positively energizing the coil in this disclosure refers to energization in a direction that generates a magnetic flux in the coil in a narrowing direction of the magnetic gap.

In the solenoid-type clutch device, a moving core has a moving core main member made of soft magnetic materials and a permanent magnet member made of hard magnetic materials. A magnetic pole direction of the permanent magnet member coincides with a magnetic pole direction of the coil when the coil is positively energized with the forward current, and the stator core is non-existent in a range of movement of the permanent magnet member.

Since the solenoid-type clutch device has the permanent magnet member in the moving core, the magnetic flux of the coil can be rectified by the permanent magnet member. This reduces the magnetic flux leaking into a side of the rotatable member which is made of soft magnetic materials. In particular, it is possible to properly perform the rectification of the magnetic flux in a case that the magnetic pole direction of the permanent magnet member coincides with the magnetic pole direction of the coil when it is positively energized with a forward current. Moreover, since there is the non-existent portion of the stator core in the range of movement of the permanent magnet member, it is possible to prevent generation of a magnetic flux loop of the magnetic field of the permanent magnet and it is possible to prevent a reduction of the attractive force.

In the solenoid-type clutch device of the second disclosure, the permanent magnet member is located on a side of the moving core that is closer to the magnetic gap. This allows to reduce a leakage of the magnetic flux to the rotatable member by making a flux rectification effect by the permanent magnet member more appropriate. The moving core has a moving core tip member of the moving core main member interposed between the permanent magnet member and the magnetic gap. A thickness of the part on a side of the magnetic gap has a predetermined thickness determined in accordance with a size of the magnetic gap (a stroke of the moving core). For example, it is equal to or greater than a thickness of the permanent magnet member. This prevents the moving core from being magnetically attracted to the stator core when the coil is de-energized.

In the solenoid-type clutch device of the third disclosure, the permanent magnet member provides a magnetic force to maintain positions of the moving core and the stator core even when the coil is de-energized after the coil is positively energized with a forward current to narrow the magnetic gap. On the other hand, the moving core moves in the axial direction of the rotatable member to widen the magnetic gap due to a repulsive force between the coil and the permanent magnet member and the biasing force of the return spring when the coil is negatively energized with a reverse current, and the biasing force of the return spring maintains positions of the moving core and the stator core even when the coil is de-energized after the magnetic gap is widened by negatively energizing the coil with a reverse current. In the third solenoid-type clutch device of the present disclosure, the magnetic gap can be maintained in both a narrowed state and a widened state even when the coil is de-energized.

The solenoid-type clutch device of the fourth disclosure has a bearing member made of non-magnetic material between an inside of the moving core and an outside of the rotatable member. It is possible to support the rotatable member in a rotatable manner and to support the moving core as well by the bearing member.

In the solenoid-type clutch device of the fifth disclosure, the rotatable member has an outer rotatable member in a circular tubular shape and a shaft in a cylindrical shape located in an inside of the outer rotatable member. Although the solenoid-type clutch device of the present disclosure may be used in many different applications, the fifth solenoid-type clutch device may be used even if the rotatable member has a double layered structure.

In the solenoid-type clutch device of the sixth disclosure, the outer rotatable member corresponds to a differential case of a differential device, the shaft corresponds to a drive shaft of the differential device, the first clutch plate corresponds to a first dog clutch of the differential device, and the second clutch plate corresponds to a second dog clutch of the differential device. A rotation of the differential case is then transmitted to the drive shaft via the ring gear, the first dog clutch, the second dog clutch, the pinion gears, and the side gear of the differential device. The fourth solenoid-type clutch device of the present disclosure is suitable for use in the dog clutch of the differential device.

In the solenoid-type clutch device of the seventh disclosure, the differential device is located in the powertrain unit and the differential case is supported by differential case bearings in the powertrain unit in a rotatable manner. Since the differential case corresponding to the rotatable member is supported by a power train unit with differential case bearings in a rotatable manner, a excessive rotational load of the rotatable member is not applied on the solenoid-type clutch device.

### [BRIEF DESCRIPTION OF DRAWINGS]

FIG. 1 is a diagram showing a configuration of a differential device which uses a solenoid-type clutch device.
FIG. 2 is a perspective view showing the configuration of the differential device in a disassembled form.
FIG. 3 is a diagram showing the differential device which uses the solenoid-type clutch device.
FIG. 4 is a perspective view showing a ring gear and a first dog clutch of the differential device.
FIG. 5 is a perspective view showing a disengaged state of the first dog clutch and a second dog clutch.
FIG. 6 is a perspective view showing an engaged state of the first dog clutch and the second dog clutch.
FIG. 7 is a perspective view showing an engaged state of the second dog clutch and a pinion gear.
FIG. 8 is a perspective view showing an engaged state of the pinion gear and a side gear.
FIG. 9 is a diagram explaining a rotational transmission of the solenoid-type clutch device in the engaged state.
FIG. 10 is a diagram explaining a rotational transmission of the solenoid-type clutch device in the disengaged state.
FIG. 11 is a cross-sectional view showing the disengaged state of the solenoid-type clutch device.
FIG. 12 is a cross-sectional view showing the engaged state of the solenoid-type clutch device.
FIG. 13 is a diagram explaining magnetic flux between the solenoid-type clutch device of the present disclosure and a solenoid-type clutch device of a comparative example.
FIG. 14 is a diagram explaining magnetic a relationship between a stroke and an attractive force of the solenoid-type clutch device of the present disclosure and the solenoid-type clutch device of the comparative example.

### [DETAILED DESCRIPTION]

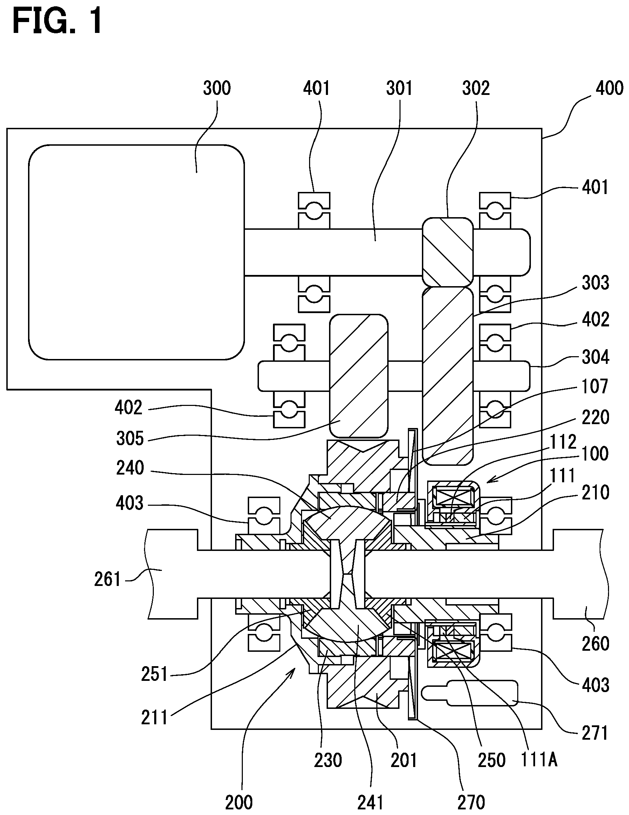

An example of a differential device 200 using a solenoid-type clutch device 100 of the present disclosure is described below. FIG. 1 shows an overview of the configuration. The differential device 200 is used in a four-wheeled vehicle to transmit a driving force of a motor 300 to a left tire and a right tire (not illustrated) and to allow the left tire and the right tire to rotate at different speeds. The motor 300 and the differential device 200 are located in a powertrain unit 400 together with the solenoid-type clutch device 100.

The motor 300 is fixed to the powertrain unit 400. The motor shaft 301 is supported in the powertrain unit 400 by the motor shaft bearings 401 in a rotatable manner. Rotation of the motor shaft 301 is transmitted to the intermediate shaft 304 by meshing of the motor gear 302 and the first reduction gear 303. The intermediate shaft 304 is also supported on the powertrain unit 400 by the intermediate shaft bearings 402 in a rotatable manner. Although the motor shaft bearings 401, and the intermediate shaft bearings 402, etc. are illustrated in a simplified manner with symbols, various types of bearings such as ball bearings, roller bearings, etc. can be used.

Rotation of the intermediate shaft 304 is transmitted from the second reduction gear 305 to the ring gear 201 of the differential device 200. A number of teeth on the first reduction gear 303 is greater than a number of teeth on the motor gear 302, and a number of teeth on the ring gear 201 is greater than a number of teeth on the second reduction gear 305. Therefore, the rotation of the motor 300 is transmitted to the differential device 200 at a reduced speed. As a result, a rotational torque transmitted to the differential device 200 is increased. The ring gear 201, the second reduction gear 305, the first reduction gear 303, and the motor gear 302 are all helical gears for high engagement ratios.

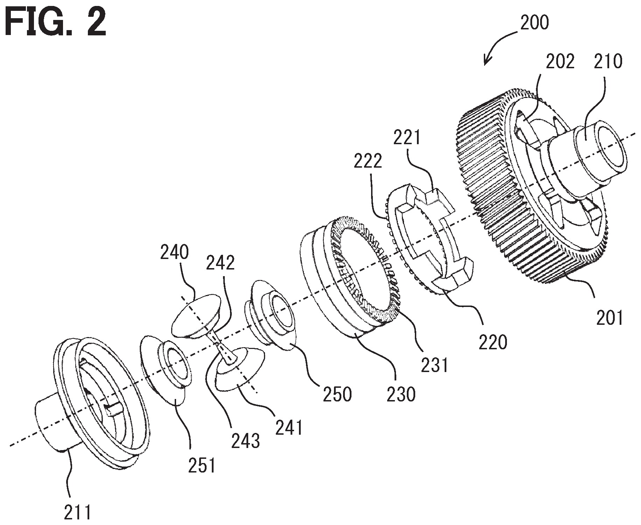

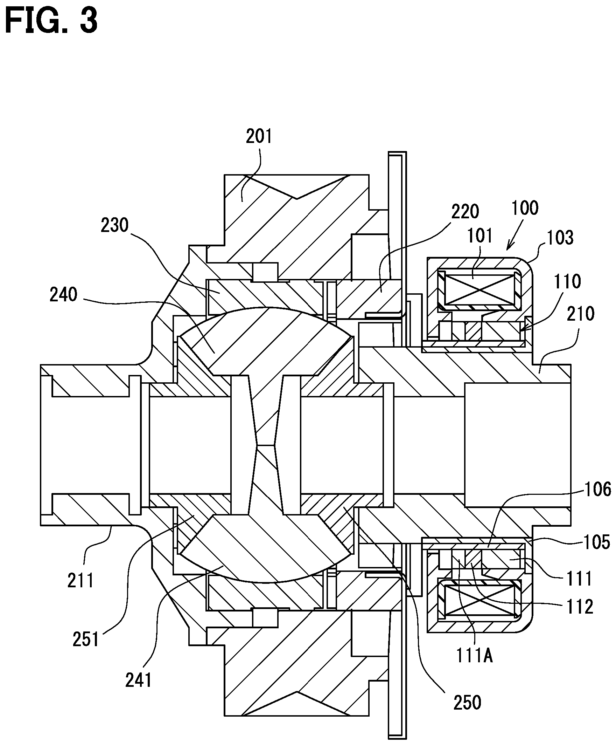

Next, a configuration of the differential device 200 is explained by referring FIG. 2 thru FIG. 8. FIG. 2 shows main components of the differential device 200 in a disassembled form. As described above, the ring gear 201 is rotated by receiving the rotation of the motor 300. A pair of differential cases (the one-side differential case 210 and the other side differential case 211) are fixedly arranged on both sides of the ring gear 201 by welding or other means. Thus, the one-side differential case 210 and the other side differential case 211 rotate with the ring gear 201. A pair of differential cases (the one-side differential case 210 and the other side differential case 211) are supported on the powertrain unit 400 by differential case bearings 403 in a rotatable manner. In this embodiment, as shown in FIG. 3, the solenoid-type clutch device 100 is located on an outside of the one-side differential case 210, so the one-side differential case 210 provides a rotatable member.

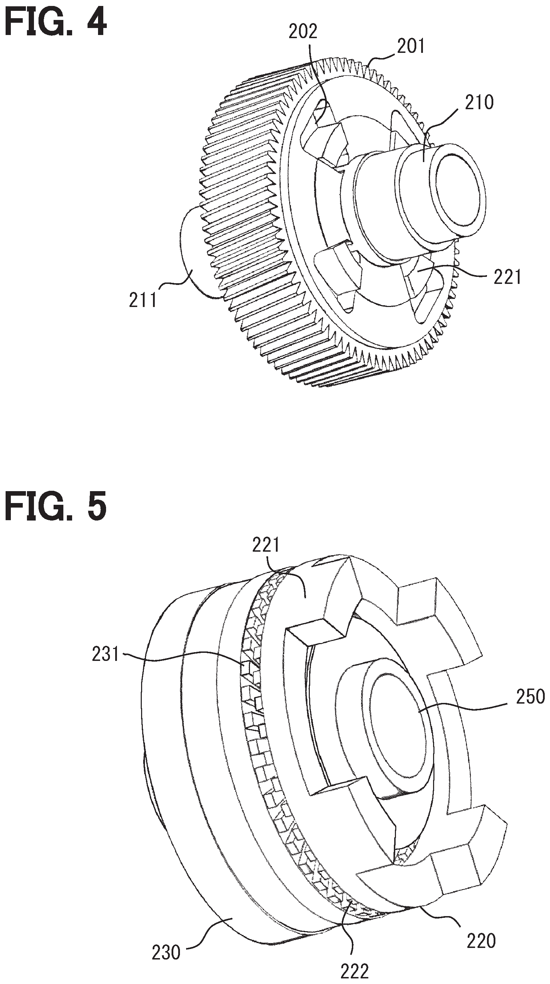

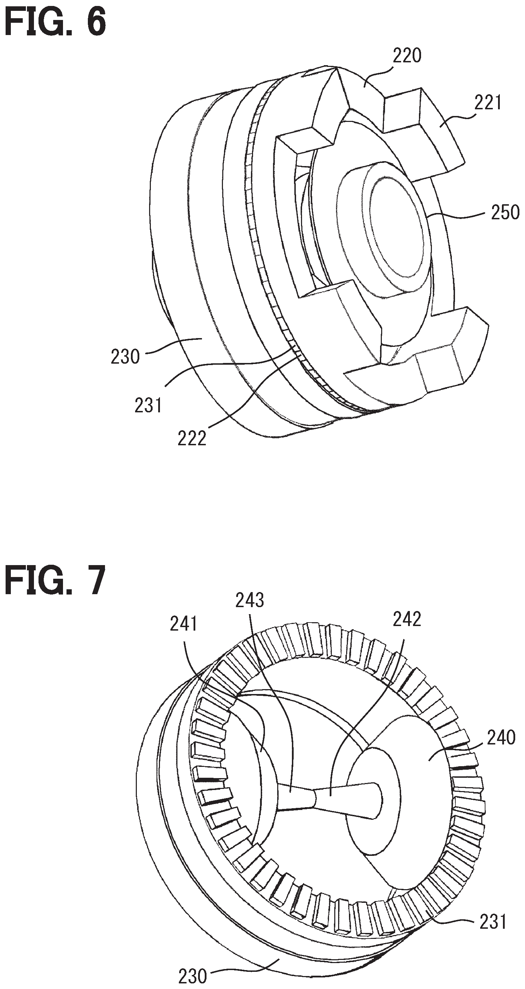

As shown in FIG. 4, the ring gear 201 has four engagement recesses 202 spaced apart in the circumferential direction. Engagement protrusions 221 of the first dog clutch 220 are fitted into the engagement recesses 202. Therefore, the first dog clutch 220 rotates together with the ring gear 201. As shown in FIG. 5, the first dog clutch 220 has a ring shape. Many number of the first dog teeth 222 are formed on a surface on a side opposite to the engagement protrusions 221 of the first dog clutch 220. A second dog clutch 230 is arranged to oppose the first dog clutch 220, and the second dog clutch 230 is also a ring-shape. Second dog tooth 231 that engage with the first dog tooth 222 of the first dog clutch 220 are also formed on the second dog clutch 230. FIG. 6 shows the first dog tooth 222 of the first dog clutch 220 and the second dog tooth 231 of the second dog clutch 230 in the engaged state.

As shown in FIG. 7, a pair of pinion gears (a one-side pinion gear 240 and the other-side pinion gear 241) are located in an inside of the second dog clutch 230 in a ring shape. The one-side pinion gear 240 and the other-side pinion gear 241 rotate with the second dog clutch 230 by a one-side pin 242 and the other-side pin 243. In other words, the second dog clutch 230 rotates with a pair of pinion gears located in the inside.

A pair of pinion gears (the one-side pinion gear 240 and the other-side pinion gear 241) can rotate around the one-side pin 242 and the other-side pin 243, respectively. Thus, the pair of pinion gears can revolve around the one-side pin 242 and the other-side pin 243 while orbiting with the second dog clutch 230.

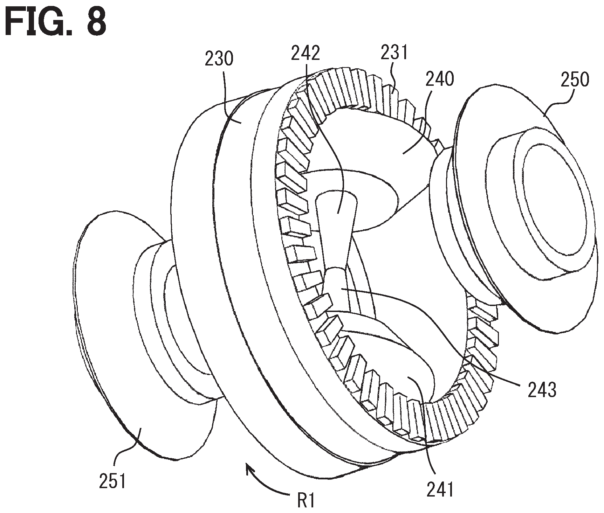

As shown in FIG. 8, a pair of pinion gears are meshed with a pair of side gears. The pair of pinion gears includes the one-side pinion gear 240 and the other-side pinion gear 241. The pair of side gears includes the one-side side gear 250 and the other-side side gear 251. Although omitted in FIG. 2, FIG. 7 and FIG. 8, gear teeth are formed on the conical surfaces of a pair of the pinion gears. The pair of pinion gears includes the one-side pinion gear 240 and the other-side pinion gear 241. The pair of the side gears also have gear teeth formed on conical surfaces opposite to the pair of the pinion gears. They mesh at their gear teeth to transmit rotational force.

Returning to FIG. 1, the pair of side gears are connected to a pair of drive shafts. The pair of drive shafts includes the one-side drive shaft 260 and the other-side drive shaft 261. Thus, the rotational force of the motor 300 received via the ring gear 201 is transmitted to the one-side drive shaft 260 and the other-side drive shaft 261 via the differential device 200. The one-side drive shaft 260 is located in the inside of the one-side differential case 210, which has a cylindrical shape. Thus, for the solenoid-type clutch device 100, the one-side differential case 210 provides an outer rotatable member and the one-side drive shaft 260 provides a columnar shaft located in an inside of the outer rotatable member.

As shown in FIG. 1, a sensor disk 270 is fixed to the one-side differential case 210. Thus, the sensor disk 270 rotates with the ring gear 201 and the one-side differential case 210. A position sensor 271 is located corresponding to the sensor disk 270. In a typical example, the position sensor 271 is provided by a magnetic sensor. An example of a magnetic sensor is a Hall sensor. The Hall sensor detects changes in the magnetic flux of a magnet located on the sensor disk 270. As a result, it detects a direction of rotation and a speed of rotation of the ring gear 201. Of course, other position sensors 271 such as resolvers may be used. The return spring 107 is located on the sensor disk 270. The return spring 107 biases the first dog clutch 220 to pull away from the second dog clutch 230. The return spring 107 is discussed below in the solenoid-type clutch system 100.

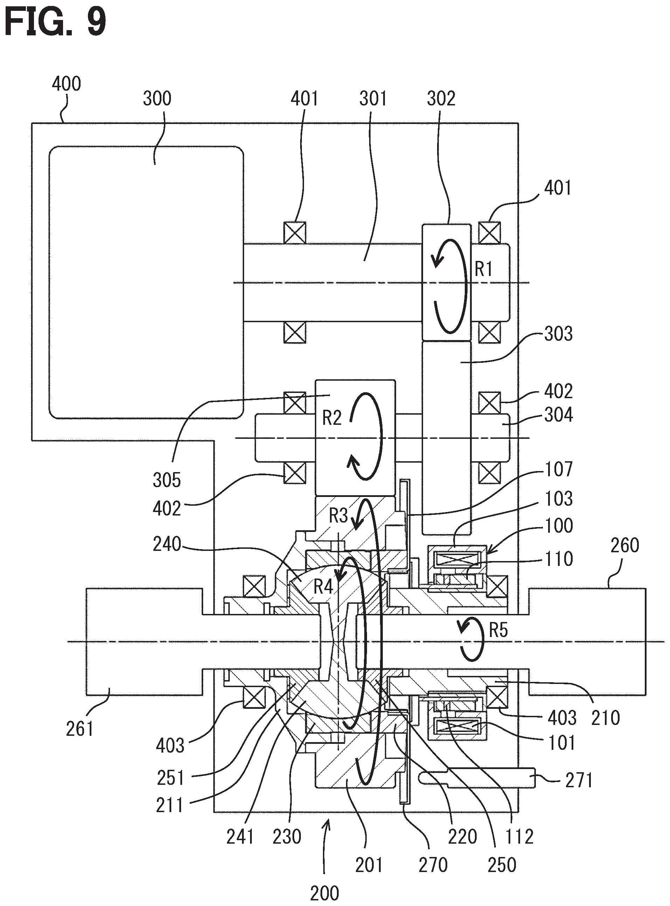

Next, a rotational transmission of the motor 300 is explained using FIG. 9. The motor 300 can be switched between forward rotation and reverse rotation by a controller not illustrated. A forward direction of the car is the forward rotation and a reverse direction is the reverse rotation. A rotational speed of the motor 300 can also be controlled by the controller not illustrated. Suppose that the rotational direction R1 of the motor shaft 301 in FIG. 9 is a forward rotation. In that case, the direction R2 of rotation of the intermediate shaft 304, is a reverse direction, while the direction R3 of rotation of the ring gear 201 is forward. As described above, the output of the motor 300 is reduced by a reduction ratio between the motor gear 302 and the first reduction gear 303, and between the second reduction gear and the ring gear 201. The output of the motor 300 increases the drive torque. As a result, the rotational force of the motor 300 is transmitted to the ring gear 201.

If the solenoid-type clutch device 100 is in an ON state, the first dog clutches 220 and the second dog clutch 230 are in a state where the first dog teeth 222 and the second dog teeth 231 are engaged. Therefore, the forward rotation of the ring gear 201 is transmitted to the second dog clutch 230 via the first dog clutch 220, and the second dog clutch 230 also rotates in the forward rotation. A direction R4 of revolution of the one-side pinion gear 240 and the other-side pinion gear 241, which revolve together with the second dog clutch 230, is also a forward direction. The orbital rotation of the one-side pinion gear 240 and the other-side pinion gear 241 is transmitted to the one-side drive shaft 260 and the other-side drive shaft 261 via the one-side side gear 250 and the other-side side gear 251. Therefore, the direction R5 of rotation of the one-side drive shaft 260 and the other-side drive shaft 261, is also the forward direction.

When the car is driven straight ahead, the pair of pinion gears do not rotate but orbit, and the speeds of the one-side drive shaft 260 and the other-side drive shaft 261 are equal. When the car driven in curves, the one-side pinion gear 240 and the other-side pinion gear 241 revolve on their own while orbiting. As a result, it is possible to make a speed of the driveshaft located on the outside of the curve may be higher than a speed of the driveshaft located in the inside of the curve.

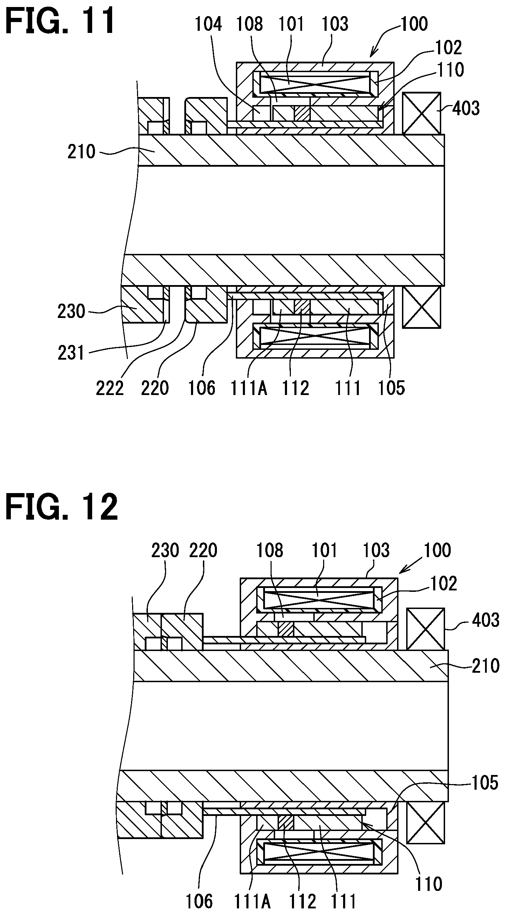

Next, a configuration of the solenoid-type clutch device 100 is explained using FIG. 11 and FIG. 12. In this example, the solenoid-type clutch device 100 switches between an engagement and a disengagement of the first dog clutch 220 and the second dog clutch 230. Thus, in this example, the first dog clutch 220 corresponds to the first clutch plate and the second dog clutch 230 corresponds to the second clutch plate. Numeral 101 shows a coil of copper wire insulated with enamel coating and wound numerous times. The coil 101 is wound around a bobbin 102 made of a plastic material in a cylindrical shape. For example, PolyButyleneTerephthalate PBT is used as the bobbin material.

The coil 101 is magnetized when it is energized with current. The stator core 103 is arranged on both side surface and an outside of the coil 101 to form a magnetic circuit in that case. The stator core 103 is made of soft magnetic materials, a material with low magnetic holding power and high permeability. For example, it may be ferritic stainless steel, Permalloy, and electromagnetic steel sheets. Thus, when the coil 101 is energized, it forms a magnetic circuit, but when the coil 101 is de-energized, it is not magnetized by the coil 101. However, even when it is not energized, the stator core 103 is magnetized under the influence of the magnetic force of the permanent magnet member 112. The position of the moving core 110 can be maintained according to a degree of magnetization. The location of the moving core 110 is discussed below.

The stator core 103 has a cylindrical shape with an outer diameter of about 100 mm. A member arranged to oppose the stator core 103 via the magnetic gap 104 is the moving core 110. In this embodiment, the moving core 110 is configures of a moving core main member 111 made of soft magnetic materials and a permanent magnet member 112 made of hard magnetic materials. Hard magnetic materials have a large residual magnetic flux density and are materials that function as permanent magnets.

A moving core tip member 111A made of soft magnetic materials is located on a surface facing the magnetic gap 104 with the stator core 103 among the moving core 110 (the moving core main member 111). The moving core 110 is located in an inside of the stator core 103 in a ring shape. And, it is located on an outside of the one-side differential case 210 corresponding to the rotatable member (especially the outer rotatable member). The moving core 110 is arranged to be movable in the axial direction of the rotatable member (the one-side differential case 210).

A surface facing the magnetic gap 104 with the stator core 103 among the surface of the moving core 110 is provided by the moving core tip member 111A made of soft magnetic materials. Between the moving core main member 111 and the magnetic gap 104 with the stator core 103, the permanent magnet member 112 and the moving core tip member 111A are arranged in this order. The moving core main member 111, the permanent magnet member 112, and the moving core tip member 111A are in contact with each other. In other words, the moving core main member 111 and the permanent magnet member 112 are arranged to come in contact with both sides of the permanent magnet member 112. The moving core tip member 111A faces the magnetic gap 104 with the stator core 103. The direction of movement of the moving core 110 is also referred to as the axial direction. The axial length of the non-existent portion 108 is longer than the axial length of the permanent magnet member 112. An axial length of the non-existent portion 108 is longer than an axial length of the moving core tip member 111A. Throughout the entire range of movement of the moving core 110, the permanent magnet member 112 is located within the axial extent of the non-existent portion 108. As a result, the non-existent portion 108 extends over the entire range of movement of the permanent magnet member 112.

The stator core 103 and the coil 101 are fixedly arranged in the powertrain unit 400. In this example, the bearing member 105 is placed in a gap with the rotatable member (the one-side differential case 210). The bearing member 105 is made of a non-magnetic material that is not magnetized and thus not affected by magnetic fields. For example, stainless steel is used as a non-magnetic material for the bearing member 105. Therefore, the bearing member 105 and the moving core 110 are supported by the one-side differential case 210 in a rotational manner. A load of the bearing of the one-side differential case 210 is carried by the differential case bearings 403, and in this condition, the bearing member 105 is supporting the moving core 110 in a sliding manner. An inner diameter of the bearing member 105 is slightly larger than an outer diameter of the one-side differential case 210. The outer diameter of the one-side differential case 210 is, e.g., about 55 mm.

The moving core 110 is connected to the first dog clutch 220, which corresponds to the first clutch plate, by a plunger 106 made of non-magnetic material. The plunger 106 is made of stainless steel. The plunger 106 is formed in a cylindrical shape to cover the one-side differential case 210 providing the rotatable member. The plunger 106 in a cylindrical shape has a one end surface fixed to the first dog clutch 220, and an outside surface fixed to the moving core 110. Likely, the plunger 106 only needs to be in contact with the first dog clutch 220 and does not necessarily need to be fixed.

FIG. 11 shows a state of the coil 101 when it is not energized. The first dog clutch 220 is pulled away from the second dog clutch 230 by a biasing force of the return spring 107. As shown in FIG. 12, a magnetic circuit is formed by the stator core 103 and the moving core 110 around the coil 101 by a state in which the coil 101 is positively energized with the forward current from the state shown in FIG. 11. Then, the magnetic force acts to narrow the magnetic gap 104 that may exist in the magnetic circuit during the positive energization with the forward current. The magnetic force at that time is set to be greater than the biasing force of the return spring 107. Thus, the moving core 110 moves, through the plunger 106, to bring the first dog clutch 220 into an engagement state with the second dog clutch 230.

As understandable from FIG. 11 and FIG. 12, a portion of the stator core 103 that may be covered with a range of movement of the permanent magnet member 112 is removed to define a non-existent portion 108 of the stator core 103. This arrangement is provided to prevent an occurrence of magnetic flux loops by the magnetic field of the permanent magnet member 112 by making the magnetic circuit configuration such that there is no magnetic material on an opposite surface of the permanent magnet member 112. Since the magnetic flux loop will cause a reduction in the attractive force at the magnetic gap 104, the non-existent portion 108 prevents a reduction in the attractive force.

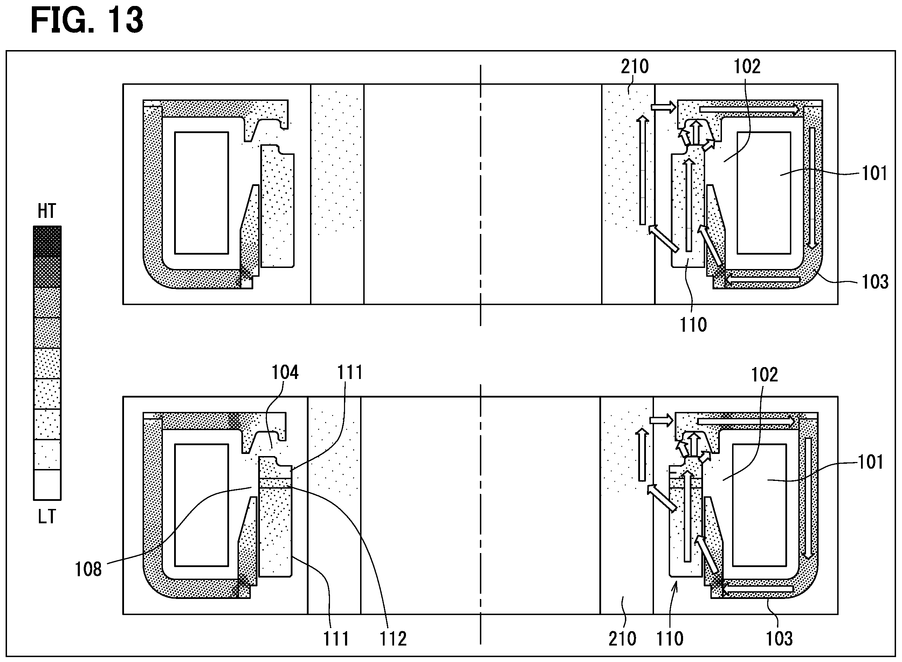

FIG. 13 contrasts an example of the moving core 110 with the permanent magnet member 112 (a lower stage) with an example of the moving core 110 without the permanent magnet member 112 (an upper stage). The upper stage shows an example having no permanent magnet member 112. As shown in the legend on the far left in the drawing, the pattern of dots on the member indicates the magnitude of the magnetic flux. As illustrated, closer to black (HT) indicates a larger magnetic flux, and closer to white (LT) indicates a smaller magnetic flux. It is understandable that a magnetic circuit is formed in the stator core 103 and the moving core 110 when the coil 101 is positively energized with the forward current. The magnetic flux passes through the magnetic gap 104 and attracts the moving core 110 toward the stator core 103 over the magnetic gap 104.

However, as shown in the upper stage of FIG. 13, a part of the magnetic flux flows to a side of the one-side differential case 210, which is the rotatable member. This is because both the one-side differential case 210 and the moving core 110 are made of the same soft magnetic material. The magnetic flux that flowed to a side of the one-side differential case 210 did not contribute at all to attract the moving core 110. The magnetic force of the coil 101 is wasted. In the illustration in FIG. 13, only the one-side differential case 210 is illustrated as the rotatable member located on an inside and an outside of the rotatable member. Actually, however, the one-side drive shaft 260 is located on a side in an inside of the one-side differential case 210. Since the one-side drive shaft 260 is also made of soft magnetic materials, a leakage of the magnetic flux to a side of the rotatable member is further increased.

In contrast, as shown in the lower stage of FIG. 13, if the permanent magnet member 112 is provided, the magnetic flux of the coil 101 is rectified by the permanent magnet member 112. This is because the direction of the magnetic pole of the permanent magnet member 112 coincides with the direction of the magnetic pole of the coil 101 when it is positively energized with the forward current. The magnetic flux leaking to a side of the one-side differential case 210 is not zero, but it is significantly reduced compared to the upper stage. As mentioned above, a portion facing the permanent magnet member 112 is the non-existent portion 108 of the stator core 103. Therefore, no magnetic flux loops caused by the permanent magnet member 112 are generated in the non-existent portion 108.

As understood from FIG. 13, it is desirable to reduce a leakage of the magnetic flux to a side of the one-side differential case 210, which is the rotatable member. For this purpose, it is desirable that a configuration in which the permanent magnet member 112 is placed on a side closer to the magnetic gap 104. In other words, a thickness of the moving core tip member 111A of the moving core 110 (the moving core main member 111) is defined by how a magnetic force of the permanent magnet member 112 is utilized. In this example, the permanent magnet member 112 is also used to hold the position of the moving core 110.

As mentioned above, when the coil 101 shown in FIG. 11 is de-energized, the first dog clutch 220 is pulled away from the second dog clutch 230 by the biasing force of the return spring 107. On the other hand, when the coil 101 is positively energized with the forward current from the state shown in FIG. 11, the magnetic gap 104 is narrowed and the first dog clutch 220 shifts into the engagement state with the second dog clutch 230, as shown in FIG. 12. In this state, even if the coil 101 is de-energized, the state shown in FIG. 12 is maintained due to the magnetic force of the permanent magnet member 112. That is, in this example, both the disengaged state of the first dog clutch 220 and the second dog clutch 230 shown in FIG. 11 and the engaged state of the first dog clutch 220 and the second dog clutch 230 shown in FIG. 12 are maintained without energizing the coil 101.

In this example, to switch from the engaged state shown in FIG. 12 to the disengaged state shown in FIG. 11, the coil 101 is energized with a reverse current. The reverse current and the forward current mean that the coil 101 is energized in opposite current by connecting a positive and a negative in a reversal manner. If it is energized with current in reverse direction, the magnetic force generated by the coil 101 repels the magnetic force of the permanent magnet member 112, and widens the magnetic gap 104. Once the magnetic gap 104 widens, it is maintained by the biasing force of the return spring 107.

Therefore, the relationship between the biasing force of the return spring 107 and the magnetic force of the permanent magnet member 112 is as follows. When the magnetic gap 104 is narrowed and the first dog clutch 220 and the second dog clutch 230 are engaged, the magnetic force of the permanent magnet member 112 is greater than the biasing force of the return spring 107. Conversely, when the magnetic gap 104 is narrowed and the first dog clutch 220 and the second dog clutch 230 are disengaged, the biasing force of the return spring 107 is greater than the magnetic force of the permanent magnet member 112. In other words, in the engaged state, the attractive force by the magnetic force of the permanent magnet member 112 exceeds the biasing force of the return spring 107. Conversely, in the disengaged state, the biasing force of the return spring 107 exceeds the attractive force by the magnetic force of the permanent magnet member 112. The thickness of the moving core tip member 111A described above is thus defined to set the magnetic force of the permanent magnet member 112. In this example, the thickness of the moving core tip member 111A is equal to or greater than the thickness of the permanent magnet member 112. That is, the magnetic force of the permanent magnet member 112 is adjusted by placing the moving core tip member 111A having a predetermined thickness in an interposed manner on a side to the magnetic gap 104 of the permanent magnet member 112.

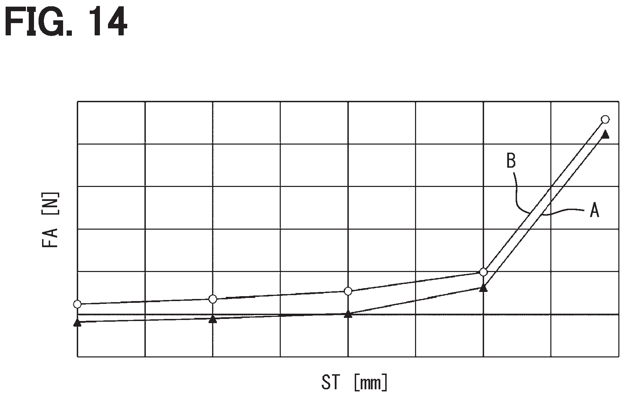

Thus, in this embodiment, the magnetic force of the coil 101 during an energization with the forward current is used most efficiently by placing the permanent magnet member 112 in an appropriate position of the moving core 110 . FIG. 14 shows relationships between a stroke and an attractive force of an example of the upper stage and an example of the lower stage of FIG. 13. The attractive force FA in Fig. 14 is the attractive force generated in the magnetic gap 104 when the coil 101 is energized with the forward current. The example of the upper stage is shown by a solid line A and the example of the lower stage is shown by a solid line B. As illustrated, a solid line A and a solid line B show that the behaviors as the solenoid-type clutch device 100 are the same. However, over the all stroke range, the solid line B, which shows the lower example, demonstrates a higher attractive force than the solid line A.

In this embodiment, since the permanent magnet member 112 is used, it is possible to shift the first dog clutch 220 and the second dog clutch 230 from the disengaged state to the engaged state with high attractive force. In addition, in this embodiment, the engaged state is maintained. In other words, in this example, it is possible to make smaller the coil 101 required to exert sufficient attractive force for engagement.

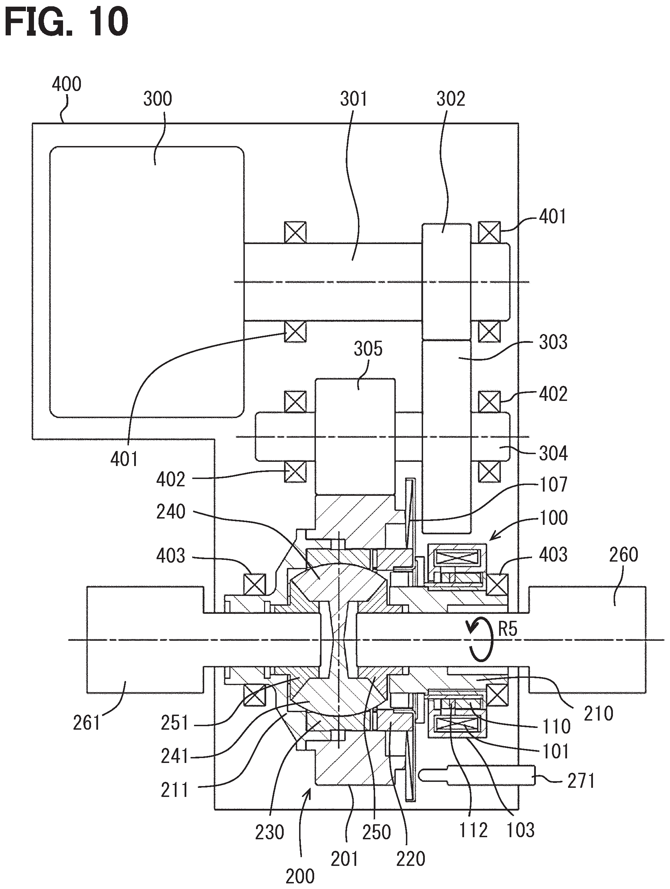

As shown in FIG 9, in the engaged state, the rotation of the motor 300 is transmitted to the one-side drive shaft 260 and the other side drive shaft 261 via the differential device 200. On the other hand, in the disengaged state, as shown in FIG. 10, the rotation R5 of the one-side drive shaft 260 and the other-side drive shaft 261 is transmitted up to the second dog clutch 230. As a result, in the disengaged state, no rotation is transmitted to the motor 300. If the motor 300 is rotated, a back electromotive force is generated, so the first dog clutch 220 and the second dog clutch 230 are disengaged when the vehicle is driven inertially. When the motor 300 is used for regenerative braking or power generation, the first dog clutch 220 and the second dog clutch 230 are engaged.

Although the above description is a preferred embodiment of the present disclosure, the present disclosure may be modified in various ways. For example, the bearing member 105 is desirable for supporting purpose of the moving core 110, but it may be eliminated. Elimination of the bearing member 105 allows to make the solenoid-type clutch device 100 smaller.

In this embodiment, the first and second dog clutches 220 and 230 are engaged by the coil 101 with the forward current. In the embodiment, the coil 101 is then de-energized, but the engagement state is maintained by the magnetic force of the permanent magnet member 112. This is a desirable example because both a engaged state and a disengaged state are maintained without energizing the coil 101. Alternatively, it is possible to maintain the engaged state by the magnetic force of the coil 101, by adjusting the magnetic force of the permanent magnet member 112 smaller, or by adjusting the thickness of the moving core tip member 111A larger.

In this embodiment of the solenoid-type clutch device 100, displacement of the moving core 110 may also be transmitted to either the first clutch plate or the second clutch plate. The movement of the moving core 110 may then be used in the direction of engaging or the direction of disengaging the first clutch plate and the second clutch plate.

In this embodiment, the solenoid-type clutch device 100 is used to engage the first dog clutch 220 and the second dog clutch 230. Alternatively or additionally, it is possible to use the solenoid-type clutch device 100 for other applications in the differential device 200. For example, the solenoid-type clutch device 100 could be used for a limited differential device that is utilized in situations such as one drive shaft not rotating due to tire slippage.

Furthermore, the solenoid-type clutch device 100 of this embodiment is not limited in application to the differential device 200. It is possible to utilize a solenoid-type clutch device 100 placed on an outside of the rotatable member made of soft magnetic materials for a wide range of applications, not limited to the differential device 200.

Furthermore, the materials and sizes described above are merely examples and can be appropriately selected depending on the required performance. The disclosure in this specification, the drawings, and the like is not limited to the exemplified embodiments. The disclosure includes exemplary embodiments and modifications by those skilled in the art based on the exemplary embodiments.

### Disclosure of Technical Idea

This description discloses multiple technical ideas described in multiple sections listed below. Some sections may be written in a multiple dependent form, where a subsequent section refers to preceding sections selectively. In addition, some sections may be described in a multiple dependent form referring to another multiple dependent form. These items described in multiple dependent form define a plurality of technical ideas.

### Technical Idea 1

a rotatable member made of soft magnetic materials that is rotatable around a center shaft;
a first clutch plate rotatable together with the rotatable member;
a second clutch plate arranged to oppose the first clutch plate;
a coil fixedly disposed on an outside of the rotatable member;
a stator core made of soft magnetic materials that is fixedly disposed on an outside of the rotatable member and constitutes a magnetic circuit when the coil is energized;
a moving core which is located on an outside of the rotatable member at an inside of the coil to form a magnetic gap with the stator core, forms a magnetic circuit with the stator core when the coil is energized, and is movable in an axial direction of the rotatable member to narrow the magnetic gap when the coil is positively energized;
a return spring that forces the stator core and the moving core in a direction of pulling away from each other; and
a plunger made of non-magnetic material that transmits a movement of the moving core in an axial direction of the rotatable member to either the first clutch plate or the second clutch plate, wherein
the moving core has a moving core main member made of soft magnetic materials and a permanent magnet member made of hard magnetic materials, and wherein
a magnetic pole direction of the permanent magnet member coincides with the magnetic pole direction when the coil is positively energized, and wherein
the stator core is non-existent in a range of movement of the permanent magnet member.

### Technical Idea 2

The solenoid-type clutch device according to Technical idea 1, wherein
the permanent magnet member is located on a side of the moving core that is closer to the magnetic gap, and wherein
the moving core has a moving core tip member of the moving core main member interposed between the permanent magnet member and the magnetic gap, and wherein
a thickness of the moving core tip member is a predetermined thickness determined according to a size of the magnetic gap.

### Technical Idea 3

The solenoid-type clutch device according to Technical idea 1 or 2, wherein
the permanent magnet member provides a magnetic force to maintain positions of the moving core and the stator core even when the coil is de-energized after the coil is positively energized with a forward current to narrow the magnetic gap, and wherein
the moving core moves in the axial direction of the rotatable member to widen the magnetic gap due to a repulsive force between the coil and the permanent magnet member and a biasing force of the return spring when the coil is negatively energized with a reverse current, and wherein
the biasing force of the return spring maintains positions of the moving core and the stator core even when the coil is de-energized after the magnetic gap is widened by negatively energizing the coil with a reverse current.

### Technical Idea 4

The solenoid-type clutch device according to any one of Technical ideas 1-3, further comprising:
a bearing member made of non-magnetic material is interposed between an inside of the moving core and
an outside of the rotatable member.

### Technical Idea 5

The solenoid-type clutch device according to any one of Technical ideas 1-4, wherein
the rotatable member has an outer rotatable member in a circular cylindrical shape and a shaft in a columnar shape located in an inside of the in the outer rotatable member.

### Technical Idea 6

The solenoid-type clutch device according to Technical idea 5, wherein
the outer rotatable member corresponds to a differential case of a differential device, and wherein
the shaft corresponds to a drive shaft of the differential device, and wherein
the first clutch plate corresponds to a first dog clutch of the differential device, and wherein
the second clutch plate corresponds to a second dog clutch of the differential device, and wherein
a rotation of the differential case is transmitted to the drive shaft via a ring gear, the first dog clutch, the second dog clutch, a pinion gear, and a side gear of the differential device.

### Technical Idea 7

The solenoid-type clutch device according to Technical idea 6, wherein
the differential device is located in a powertrain unit and the differential case is supported by differential case bearings in the powertrain unit in a rotatable manner.

## Claims

1. A solenoid-type clutch device, comprising:
a rotatable member made of soft magnetic materials that is rotatable around a center shaft;
a first clutch plate rotatable together with the rotatable member;
a second clutch plate arranged to oppose the first clutch plate;
a coil fixedly disposed on an outside of the rotatable member;
a stator core made of soft magnetic materials that is fixedly disposed on an outside of the rotatable member and constitutes a magnetic circuit when the coil is energized;
a moving core which is located on an outside of the rotatable member at an inside of the coil to form a magnetic gap with the stator core, forms a magnetic circuit with the stator core when the coil is energized, and is movable in an axial direction of the rotatable member to narrow the magnetic gap when the coil is positively energized;
a return spring that forces the stator core and the moving core in a direction of pulling away from each other; and
a plunger made of non-magnetic material that transmits a movement of the moving core in an axial direction of the rotatable member to either the first clutch plate or the second clutch plate, wherein
the moving core has a moving core main member made of soft magnetic materials and a permanent magnet member made of hard magnetic materials, and wherein
a magnetic pole direction of the permanent magnet member coincides with the magnetic pole direction when the coil is positively energized, and wherein
the stator core is non-existent in a range of movement of the permanent magnet member.

2. The solenoid-type clutch device according to claim 1, wherein
the permanent magnet member is located on a side of the moving core that is closer to the magnetic gap, and wherein
the moving core has a moving core tip member of the moving core main member interposed between the permanent magnet member and the magnetic gap, and wherein
a thickness of the moving core tip member is a predetermined thickness determined according to a size of the magnetic gap.

3. The solenoid-type clutch device according to claim 2, wherein
the permanent magnet member provides a magnetic force to maintain positions of the moving core and the stator core even when the coil is de-energized after the coil is positively energized with a forward current to narrow the magnetic gap, and wherein
the moving core moves in the axial direction of the rotatable member to widen the magnetic gap due to a repulsive force between the coil and the permanent magnet member and a biasing force of the return spring when the coil is negatively energized with a reverse current, and wherein
the biasing force of the return spring maintains positions of the moving core and the stator core even when the coil is de-energized after the magnetic gap is widened by negatively energizing the coil with a reverse current.

4. The solenoid-type clutch device according to claim 1 or 2, further comprising:
a bearing member made of non-magnetic material is interposed between an inside of the moving core and an outside of the rotatable member.

5. The solenoid-type clutch device according to claim 1 or 2, wherein
the rotatable member has an outer rotatable member in a circular cylindrical shape and a shaft in a columnar shape located in an inside of the in the outer rotatable member.

6. The solenoid-type clutch device according to claim 5, wherein
the outer rotatable member corresponds to a differential case of a differential device, and wherein
the shaft corresponds to a drive shaft of the differential device, and wherein
the first clutch plate corresponds to a first dog clutch of the differential device, and wherein
the second clutch plate corresponds to a second dog clutch of the differential device, and wherein
a rotation of the differential case is transmitted to the drive shaft via a ring gear, the first dog clutch, the second dog clutch, a pinion gear, and a side gear of the differential device.

7. The solenoid-type clutch device according to claim 6, wherein
the differential device is located in a powertrain unit and the differential case is supported by differential case bearings in the powertrain unit in a rotatable manner.
